# EUROPEAN PATENT SPECIFICATION

(11) **EP 2 544 879 B1**
(45) Date of publication and mention of the grant of the patent: **14.11.2018**
(21) Application number: 11752926.3
(22) Date of filing: 10.03.2011
(51) Int. Cl.: B41F 19/06, B41F 19/00, B44B 5/00, B32B 37/12, B32B 38/10

(54) **A SYSTEM AND METHOD FOR FOIL RELIEF PRODUCTION**
SYSTEM UND VERFAHREN ZUR HERSTELLUNG EINER FOLIENAUSSPARUNG
SYSTÈME ET PROCÉDÉ DE PRODUCTION DE RELIEF DE FEUILLE

(30) Priority: 10.03.2010 US 721234
(43) Date of publication of application: 16.01.2013
(73) Proprietor: Scodix Ltd., Rosh Ha'ayin 4809239 (IL)
(72) Inventor: GRINBERG, Eli, 44209 Kefar Sava (IL); BAR, Kobi, 44259 Kefar Sava (IL)
(74) Representative: White, Duncan Rohan
(86) International application number: PCT/IB2011/001354
(87) International publication number: WO 2011/110956

(56) References cited:
- EP-A1- 1 806 235
- WO-A1-02/34521
- WO-A1-03/020519
- WO-A1-2009/138335
- WO-A2-2009/040797
- WO-A2-2009/040797
- US-A- 4 866 539
- US-A- 5 520 763
- US-A1- 2007 116 910
- US-A1- 2008 156 421
- US-A1- 2009 029 054
- US-A1- 2010 055 407
- US-B1- 6 605 174

## Description

### FIELD OF THE DISCLOSURE

The present disclosure is generally directed to a system and method for foil relief production.

### BACKGROUND

A number of patents disclose foils for printing on paper, plastic, metal and other substrates (see e.g., U.S. Patent Nos. 4,717,615, 4,837,072, and 5,053,260). These technical solutions disclose foil image transfer by means of selective heating and pressing foil to printable substrates. Thermally sensitive adhesive is deposited on a side of the printing foil adjacent to the printable substrate. Pressed and heated areas of the foil become adhered. After removing a foil backing the areas that have undergone pressure and heat exposure remain on the substrate, whereas unexposed areas are removed with the foil backing.

U.S. Patent No. 5,520,763 describes selective dispensing thermal sensitive adhesive over the printable substrate. A dry toner used in xerographic process and bonded to paper by fusing, becomes adhesive to foil being heated. A desired pattern is printed on paper by a xerographic method. Printing foil is then pressed to the paper and heated. The heating causes the printed toner to melt and become tacky. The foil sticks to the tacky toner.

When the foil backing is removed, foil detaches from the foil backing and adheres to the foiling adhesive to cover the areas of the image that are desired to have foil printed. Foils are generally metallic and are often used for special printing effects. U.S. Patent Nos. 6,605,174 and 6,977,101 specify chemical compositions of xerographic toner used in foil printing.

U.S. Patent No. 4,484,970 discloses a method of applying decorative foil coated with an adhesive and ink to a material to produce an article having portions bearing ink and other portions bearing the decorative foil. The method uses foil specially coated with an adhesive, as well as ink specially adapted to repel the adhesive.

U.S. Patent No. 6,605,174 discloses a method for producing a printed image having a region that is foil printed. The method includes printing at least one region of the image with a toner, printing the region of the image to be foil-printed with a foiling adhesive that sticks to a foil on a printing foil, with the adhesive having a melting temperature lower than the melting temperature of the toner, and pressing the printing foil to the image and heating the printing foil to a temperature greater than the melting temperature of the foiling adhesive but less than the melting temperature of the toner. U.S. Patent No. 4,196,033 discloses a process for producing decorative sheets having a thermosetting resin surface. The process includes, (1) forming a pattern on a paper for decorative use with an ink containing a vehicle resin and a curing inhibitor for a thermosetting resin, (2) impregnating the entire paper for decorative use including the pattern with the thermosetting resin to form an impregnated paper wherein a film of still uncured thermosetting resin is formed over the pattern, (3) assembling a laminated structure by superposing the impregnated paper on a base material that the surface of the paper bearing the pattern will become the outer surface, and further placing a planar shaping member on the paper, (4) subjecting the laminated structure to heating and pressing to cause the thermosetting resin at parts not contacted by the curing inhibitor in the pattern to cure, leaving the thermosetting resin contacted by the curing inhibitor in the pattern in still uncured state, and (5) peeling off the planar shaping member, under heat and after the termination of the pressing, to form concavities in the film of the thermosetting resin by removing at least some of the still uncured resin due to adhesion of the uncured resin to the planar shaping member thus peeled-off. The improvement achieved by the process includes, selecting for the vehicle resin in the ink a resin having releasability from the thermosetting resin and, prior to step (2), causing the vehicle resin in the pattern formed in step (1) to harden, whereby the still uncured resin after step (4) is substantially restricted to the parts of the thermosetting resin directly over the pattern, and in step (5) substantially all of said uncured resin is released from the hardened vehicle resin and adheres to the planar shaping member.

U.S. Patent No. 4,866,539 discloses a foil printing apparatus controllable by a computer. The apparatus includes laser printing means connectable to the computer for printing a printed image on a media, and, foil transfer means controllable by the computer for automatically transferring foil from a web of material having a transferable foil thereon onto at least part of the printed image, the foil transfer means including a means for supporting the web of material, a heatable roller and a pressure means for bringing the printed image on the media into pressurized contact with the web against the heatable roller, the pressure means including a pressure roller and an actuator for urging the heatable roller and pressure roller towards each other, wherein the pressurized contact of the pressure roller against the heatable roller causes the foil on the web to transfer to at least part of the printed image on the media.

The above '174, '033 and '539 patents rely on heat produced as a byproduct of the printing process to activate the adhesive or resin, and on cooling to solidify the adhesion process.

PCT Publication WO 02/34521 discloses an apparatus for applying foil from a foil web to a substrate. The apparatus includes a printing station for printing the substrate with a curable adhesive in the areas to which foil is to be applied, a first adhesive activation station in which the adhesive on the substrate is initially partially activated, a second adhesive activation station in which the adhesive on the substrate is activated again to complete adhesive cure, and a nip between the first and second adhesive activation stations in which foil can be pressed against the partially activated adhesive, means for transporting the substrate from the printing station, past the first adhesive activation station, through the nip and past the second adhesive activation station and foil transport means for feeding foil to and from the nip. It additionally discloses a method of applying foil from a foil web to a substrate that includes the steps of printing the substrate with a curable adhesive in the areas to which foil is to be applied, subjecting the substrate to a first adhesive activation stage in which the adhesive is partially activated, passing the substrate and a foil web through a nip where the foil is pressed against the partially activated adhesive, separating the foil web from the substrate after leaving the nip and subjecting the substrate to a second adhesive activation stage to fully cure the adhesive. The succession of steps comprising the method includes partially curing the adhesive, thereby achieving a tacky surface that is brought into contact with the foil web by nipping means. In a subsequent step the foil web is separated from the substrate, such that on areas of the foil web that were pressed against the tacky surface during the nipping step remain attached to the substrate. Finally, the foil that became attached to the tacky surface is subjected to a second curing step in order to solidify the adhesion between said foil and the adhesive on the one hand, and the adhesive and the substrate on the other.

The disclosed prior art of PCT Publication WO 02/34521 relies on the first stage of curing in order to produce tackiness, such that once the nipping step is executed the areas of the web foil that come in contact with the tacky surface becomes firmly attached to it. However, once the subsequent step of separating the foil web is executed, a number of undesirable effects may occur, including: misalignment, displacement, stretching, tearing, lifting of the edges, or a combination thereof. Moreover, during the nipping step, the foil is prone to distortion due to the malleable nature of the adhesive.

Furthermore, the use of heating in the printing process is not suitable for a wide array of printable substrates such as plastic substrates due to the risk of heat induced deformation.

WO-A-2009040797 discloses a system for the production of foil relief which is equipped with an integrated nipping-curing system which comprises a radiation emitting means for curing adhesive.

WO-A-03020519 discloses a method for the application of a transferable layer from a foil to a substrate comprising the steps of applying an adhesive in a pattern to one of the substrate and the foil using a drop on demand deposition head; curing the adhesive; and transferring the transferable layer in the pattern from the foil to the substrate.

WO-A-2009138335 discloses a method and to an apparatus for application of cold foil material onto a sheet material in a processing machine.

### SUMMARY

The invention provides a method for producing foil relief as defined in claim 1, a pressing system for foil relief production as defined in claim 9 a system for the production of foil relief as defined in claim 14, and a method for applying foil onto a substrate as defined by claim 15. Further aspects and preferred embodiments are set out in the dependent claims.

### BRIEF DESCRIPTION OF THE DRAWINGS

To better understand the disclosure and its implementations in practice, embodiments will now be described by way of non-limiting examples only, with reference to the accompanying drawings.
FIG.1 is a schematic diagram of a system to perform conventional cold foil stamping.
FIG. 2 is a schematic diagram of a cold foil stamping system useful for understanding embodiments of the present invention described herein.
FIG. 3 is a schematic diagram of a pressing section, shown in the system of FIG. 1, illustrating the stretching effect caused to the foil-adhesive-substrate structure when processed by a system such as the system of FIG. 1.
FIG. 4 is a schematic diagram of a portion of the system of FIG. 2 configured to avoid stretching/warping effects during cold foil stamping.
FIGS. 5a and 5b are views of processed relief structures obtained using the systems of FIGS. 2 and 1, respectively.
FIG. 6 is a flowchart of a foil relief production procedure.
FIG. 7 is a schematic diagram of an example embodiment of the present invention showing a pressing section/machine that includes one or more energy sources to apply energy to a foil to make it more flexible, and a pressure applying machine.
FIG. 8 is a schematic diagram of a pressing machine to place foil on a curable adhesive deposited on a substrate.
FIG. 9a-b are schematic views of a nip rolling assembly.

Like reference symbols in the various drawings indicate like elements.

### DETAILED DESCRIPTION

Disclosed are methods, systems, machines and devices, including a method for producing foil relief. The method includes placing a foil on a curable adhesive deposited on a substrate when the curable adhesive is substantially non-tacky (i.e., before it has become tacky as a result, for example, of a curing process performed via application of energy). The method further includes applying energy to the arrangement of the foil placed on the substantially non-tacky adhesive, while the foil is being pressed onto the adhesive and substrate arrangement, to cause the adhesive to become tacky and to adhere to the foil. The adhesive becomes substantially fully cured prior to completion of the pressing of the foil to the substrate. In some embodiments, the curable adhesive can include, for example, a radical type adhesive, a cationic adhesive.

In the present disclosure, the terms below are defined as follows:
The term 'Inkjet Printing' or 'Inkjetting' refers hereinafter to an adaptation of the conventional technology developed for the deposition of ink onto paper, including: thermal inkjets, piezoelectric inkjets and continuous inkjets, as the devices for the deposition of various materials in liquid form, including adhesive, onto a substrate.

The term 'foil' refers to film or sheet of any material having, for example, about 1 micrometers (microns) to about 200 micrometers (microns) in thickness. In some embodiments, such a material may be a metallic material, such as, for example, tin or aluminium. Sometimes, such foil is referred to as 'cold foil'.

The term 'nipping' refers to the action of holding and/or squeezing at least two items together.

The term 'curing' refers to the toughening or hardening of a polymer material by a process of, for example, cross-linking of polymer chains, brought about by a an energy application mechanism that includes, for example, chemical additives, ultraviolet radiation, electron beam (EB), heat application.

The term 'foil backing' refers to a layer of detachable material that provides structural support for the foil.

The term 'relief' refers to a pattern or modeled form that is raised (or alternatively lowered) from a flattened background.

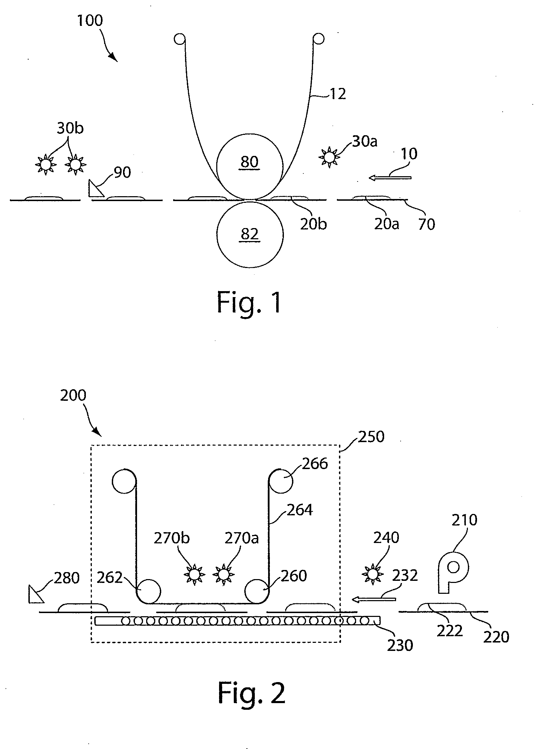

Reference is made now to FIG. 1 illustrating a conventional cold foil stamping system 100. As shown, a pattern of curable adhesive 20a is printed (deposited) on a substrate 70 using a printing device (not shown). The patterned curable adhesive generally has a thin layer of about 3 to 60 micrometers (microns) of curable adhesive that is initially non-tacky. The substrate 70 on which the curable adhesive is printed is advanced by a conventional transporting mechanism (e.g., a conveyor belt) in a direction indicated by an arrow 10. En route to the pressing part of the system 100, the adhesive is exposed to radiation emitted from an energy source 30a (e.g., a radiation source, such as, for example, a ultraviolet source) thus initiating the curing of the adhesive and causing the adhesive to become tacky (the tacky adhesive being marked as 20b). The substrate 70 topped with the now tacky pattern of the adhesive 20b is pressed against foil 12 as the foil and the adhesive deposited on the substrate pass between nipping rollers 80 and 82. Once the substrate 70 emerges from the nip of the rollers, the foil clings to the tacky surface. Subsequently, excess foil is peeled away by a foil peeler 90. The resultant "sandwich" structure comprising the substrate topped with the tacky adhesive and further topped with the trimmed foil that has clung to the patterned adhesive is subjected to radiation from a radiation source 30b for completion of the curing of the adhesive and solidification of the structure. In some situations, the peeling of excess foil in conventional systems occurs before the "sandwich" structure has become fully solidified, thus resulting in further distortion/warping of the structure when processed by the peeler.

With reference to FIG. 2, a schematic diagram of a pressing system 200 to press foil onto non-tacky adhesive useful for understanding embodiments of the present invention is shown. The system 200 includes a pressing section 250 (also referred to as a pressing machine) to press foil into a substrate-and-adhesive structure it receives from a printing section located upstream of the pressing section. The printing section includes a printing device 210 (e.g., an inkjet printer) to inject a pattern of deposit composed of a layer of adhesive 222, generally having a thickness of about 1 to 200 micrometers (microns), onto a top surface of a substrate 220. Other types of printing devices that may be used include, for example, a toner-based printer, a silk screen printer, a lithography-based printer. When deposited on the substrate 220, the adhesive layer 222 is generally non-tacky. A conveyer belt 230 advances the adhesive-topped substrate (which, as noted, may be patterned) in a direction indicated by an arrow 232.

The curable adhesive used is one which may be pre-cured to commence the curing process, but without causing the adhesive to become tacky. Pre-curing of the adhesive may be such that the embossed shape of the curable adhesive is maintained subsequent to the completion of the pre-curing operation. After the pressing of a foil on the substrate having the patterned adhesive, the adhesive is cured to cause it to become substantially tacky and thus to cause the foil, adhesive and substrate materials to adhere to each other. The adhesive becomes substantially fully cured prior to completion of the pressing of the foil to the adhesive 222 deposited on the substrate 220. The adhesive may include a radical type adhesive, a cationic adhesive. Such adhesives may include, for example, photo polymeric adhesives.

The substrate 220 may be constructed from a material composition including, for example, metal, plastic, paper, glass, non-woven fabric, methacrylic copolymer resin, polyester, polycarbonate and polyvinyl chloride, plastic, paper, glass, non-woven fabric, methacrylic copolymer resin, polyester, polycarbonate, polyvinyl chloride. The substrate 220 may be in sheet form or roll form and may be rigid or flexible.

The structure comprising the substrate 220 and the curable adhesive 222 (in its non-tacky form) may be exposed to energy applied from a first, optional, energy source 240 located upstream (i.e., before) of a nip roller 260 en route to the pressing section 250 of the system 200, thus initiating the curing of the adhesive 222 and manipulating (regulating) the adhesive's viscosity. The adhesive has an initial viscosity of 10 cps (centipoise). The energy source 240 may be a radiation source, such as a ultraviolet source, emitting UV radiation onto the curable adhesive 222 to initiate the curing process. Partial curing performed on the adhesive, e.g., to initiate the curing, causes the polymerization of the material to start so that the adhesive starts to changes its phase from liquid to solid. The energy source 240 may be, for example, a lamp generating incoherent optical radiation, a laser source, an electron beam generator, a heating element. Other types of energy sources may be used.

The energy applied to the adhesive is generally not sufficient to cause the adhesive to become tacky, but instead is used to cause the adhesive to achieve a form or state of higher viscosity such that upon further exposure to energy (e.g., from energy sources 270a and/or 270b), the adhesive will achieve a tacky form more quickly than it would have without the exposure to the energy source 240. The use of an energy source to initiate the curing process prior to arriving at the pressing machine may thus expedite the pressing process.

The structure including the adhesive-topped substrate (with or without having the adhesive 222 exposed to the upstream energy source 240 to initiate the curing process) passes through the pressing section that includes nipping rollers 260 and 262. The distance between the nipping roller 260 and the nipping roller 262 (or between a roller set that includes the roller 260 and a second roller set that includes the roller 262) is at least the length of one dimension of the substrate 220. Once the adhesive-topped substrate passes by the nipping roller 260 (as depicted in FIG. 2, the adhesive-topped substrate passes underneath the nipping roller 260), a section of a foil web 264 comes into contact with the still non-tacky surface of the adhesive 222. The foil web 264 may be fed by a spool 266 or may be pulled by the nipping roller 260. The nipping rollers (also referred to as pinching rollers) are configured to exert force on the foil passing under the nip rollers and the substrate-adhesive structure. In some implementations, the nipping operations may be performed using opposite facing rollers (in a manner similar to that depicted in FIG. 1), such that, for example, the substrate-adhesive-foil materials would be pressed together by the nipping roller 260 and another roller facing the roller 260, and subsequently would be pressed by the nipping roller 262 and possibly a further roller opposite-facing the roller 262.

Once the contact between that section of the foil and the still non-tacky surface of the adhesive on the substrate 220 has been made, the adhesive 222 is subjected to energy from the second one or more energy sources 270a and 270b (which, like the energy source 240, each may be a radiation source, a heat source) to perform the curing process of the adhesive 222 to thus cause the adhesive 222 to become tacky. As depicted in FIG. 2, in some implementations, the one or more energy sources 270 include two energy sources (e.g., arranged to define an array of energy sources) that may be arranged in configurations to enable particular energy distribution patterns.

In some implementations, a suitable adhesive that may be used is a radical-free glue that upon exposure to energy (e.g., UV radiation) with an energy level of, for example, about 5-15% of the energy output of the radiation sources used in the system 200, causes the adhesive to become more viscous, and to turn into a jelly-like material, but without the adhesive becoming tacky. The exposure of the adhesive to that level of energy can thus perform the pre-curing of the adhesive that will subsequently enable a more expeditious curing and pressing processes required to perform the cold foil relief procedure. Subsequently, the energy level applied during the pressing stage may be 85-95% of the aggregate of applied energy. For example, in some implementations, the total energy output required from the energy sources of the system 200 (e.g., the energy source 240, the energy sources 270a and 270b, and any other source that may be used in such implementations) to perform the entire curing process (i.e., the pre-curing and the remainder of the curing process) may be, for example, approximately 300W. Under those circumstances, where pre-curing energy is implemented, 10% of the total energy may be applied by the energy source 240 for a power level of 30W to initiate the curing process (i.e., to cause the pre-curing of the adhesive), while one or more energy sources 270a and 270b are configured to apply energy corresponding to 90% of the total energy exposure, or approximately 270W, to cause the adhesive to become tacky and adhere to the foil and substrate, and to subsequently solidify the adhered multi-layer structure of the foil, adhesive and substrate. As noted, the curing process, and thus the solidification (hardening) of the adhesive is completed prior to the resultant structure exiting the pressing section, and therefore any peeling of excess foil on the resultant structure is performed with curing processing having been completed (and accordingly, with the adhesive having been solidified).

The level of energy applied at the various stages of the system 200 may be based, at least in part, on the nature/composition of the adhesive material, the speed at which the substrate and adhesive deposited thereon are advancing through the various stages of the system 200. Also affecting the energy levels that are to be used during the pre-curing and/or the curing process are the characteristics of the foil material, including the foil material's energy permeability. For example, in circumstances where the energy source is a radiation source, such as a UV source, the level of energy that needs to be applied to the foil so that enough of the applied energy will reach the adhesive and interact therewith may depend on the optical permeability of the foil, which may be represented by the foil's optical density. The optical density, or *OD,* is a measure of the extent to which a material, in this case the foil 264, transmits light or other electromagnetic radiation. The *OD* may be defined according to *log tₒ*/ *I*, where /₀ is the intensity of the radiation on the foil, and *I* is the intensity of the radiation that permeates the foil and is transmitted from its opposite surface onto the adhesive. A suitable foil material that may be used to perform the cold foil relief described herein may be a foil having and optical density of, for example, 0.8-1.2.

Once the substrate has traversed the pressing section and has emerges passed the nipping roller set 262, the adhesion of the foil to the substrate 220 is substantially completed with the adhesive 222 becoming substantially solidified. A peeler 280 may then be used to peel excess foil from the substrate.

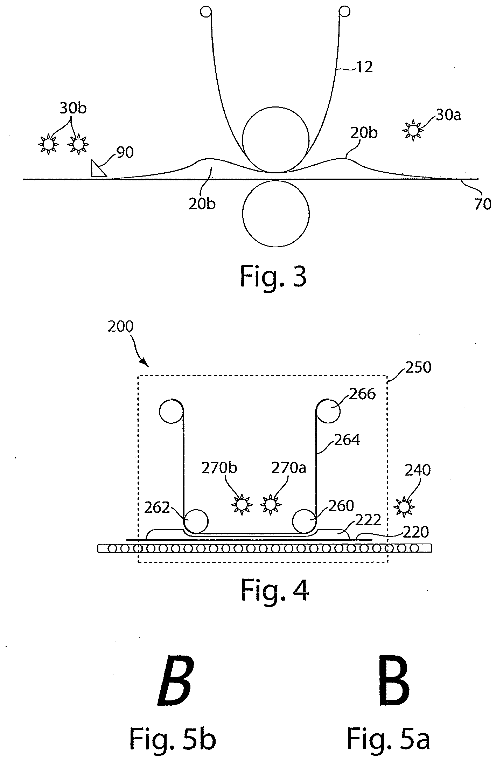

With reference to FIG. 3, a schematic view of a portion of the system 100 of FIG. 1 is shown, in which the stretching, or warping, effect of a resultant foil pressed against a substrate with a curable adhesive deposited on it is depicted. Particularly, as described herein, in the conventional system 100 of FIG. 1, the adhesive layer 20 deposited on the substrate 70 is subjected to energy from an energy source 30a that causes the adhesive to become tacky. The pressing of the foil 12 on the tacky adhesive layer 20 results in some warping of the foil's surface, causing surface irregularities of the foil's surface. Furthermore, when the resultant structure comprising the foil placed on the adhesive layer deposited on the substrate 70 exits the pressing section of the system 100, the adhesive has generally not completely solidified at that point. Thus, the distortion (warping) of the foil's surface on the substrate is exacerbated when peeling excess foil before the completion of the solidification of the adhesion between the foil 12 and the substrate 70. Such solidification of the adhesive layer is generally accomplished by the ensuing application of energy by the energy source 30b located downstream of the exit of the pressing section (and in the configuration of system 100 as depicted in FIG. 3, is also located downstream from the peeler 90.)

In contrast to the warping that can occur by using system arrangements such as the system 100, FIG. 4 illustrates a schematic diagram of part of the system 200 shown in FIG. 2 that can avoid the stretching/warping effects caused by, for example, the system 100. As described herein, the substrate 220 topped with the adhesive 222 arrives at the entrance to the pressing section 250 with the curable adhesive generally being non-tacky. As noted, pre-curing may be performed on the adhesive 222, for example, using the optional energy source 240, to put the adhesive in a condition in which further application of energy would cause the adhesive to become tacky. The substrate 220 and the adhesive 222 topped thereon are nipped to foil 264 using, for example, the nip roller 260. At that point, the adhesive is not yet tacky, and thus, minimal (if any) stretching or warping of the foil placed on the adhesive layer 222 occurs. As the structure of the foil placed on the adhesive layer 222 deposited on the substrate 220 advances through the pressing section 250 of the system 200, the one or more energy sources 270a and 270b apply energy (e.g., UV radiation) onto the foil-adhesive-substrate structure, and as a result the adhesive undergoes the curing process; first becoming tacky and adhering to the section of the foil 264 and to the substrate 220, and subsequently solidifying (hardening) to form a stable structure. When the structure comprising the foil on top of the now cured adhesive deposited on the substrate 220 emerges from the exit of the pressing stage (past the nip roller 262) the structure has generally solidified with minimal (if any) resulting stretching or warping of the foil on top of the cured adhesive layer. The generally cured structure is now processed by the peeler (not shown in FIG. 4) to peel excess foil.

With references to FIGS. 5a and 5b, views of processed relief structures obtained using the systems 200 and 100, respectively, are shown. The effect of stretching distortion of foil stamped script (the letter B) is illustrated in FIG. 5b, whereas the unwarped cold foil printing achieved using the system 200, in which the foil was placed on a non-tacky adhesive prior to commencing of the curing process, and in which the curing process was completed during the pressing process, is illustrated.

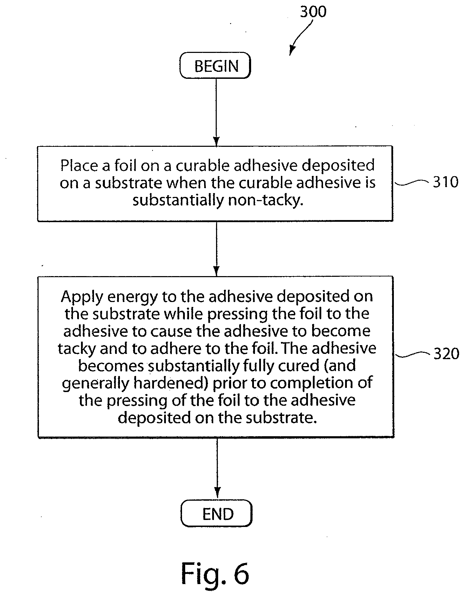

With reference to FIG. 6, a flowchart of a foil relief production procedure 300 is shown. Initially, .a curable adhesive is deposited, for example, using a printing device, on a substrate. The curable adhesive may be, for example, one or more of a radical type adhesive, a cationic adhesive. A foil is then placed 310 on the adhesive deposited on the substrate using, for example, a first nip roller set that exerts force on the foil passing underneath it. At the point when the foil is placed on the adhesive, the adhesive is not tacky. Prior to placing the foil on the non-tacky adhesive, a pre-curing of the adhesive, e.g., using an energy source placed upstream of the first nip roller set, to initiate the curing process (but without making the adhesive tacky) is performed so that upon subsequent application of energy, the adhesive would more quickly become tacky.

Having placed the foil on the adhesive-topped substrate, energy is applied 320 to the adhesive while pressing the foil to the adhesive deposited on the substrate (e.g., using the nip roller) to cause the adhesive to become tacky and cause it to adhere to the foil. The adhesive becomes substantially fully cured (and generally hardened) prior to completion of the pressing of the foil to the adhesive deposited on the substrate, and thus prior to peeling any excess foil from the resultant solidified foil-adhesive-substrate structure.

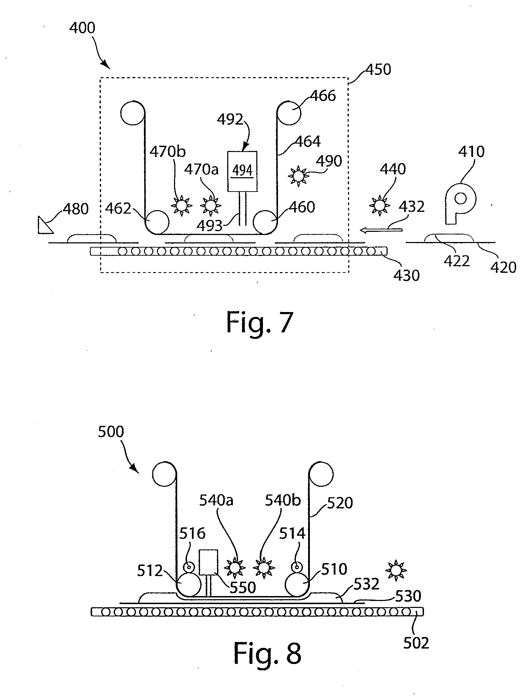

With reference now to FIG. 7, an example embodiment of the present invention, a schematic diagram of a pressing system 400 is shown. The pressing system 400 is generally similar to the system 200 depicted in FIG. 2, and is thus generally configured to perform similar operations to those performed by the system 200. As such, the system 400 includes a printing device 410 that may be similar to the printing device 210 and may include, for example, one or more of an ink jet, a toner-based printer, a silk screen printer, a lithography-based printer. The printing device is configured to print (or deposit) a patterned layered of curable adhesive 422, having a composition that may be similar to the adhesive 222 of FIG. 2, on top of a substrate 420 (which may be similar to any of the substrate materials that may be used in conjunction with the system 200). An optional energy source 440 may be operated to apply energy onto the layered adhesive on top of the substrate 420 to cause the adhesive to become pre-cured, but without causing it become tacky. When the substrate-topped-adhesive enters the entrance of the printing section 450, a section of a foil web 464 is pressed against the non-tacky adhesive using, for example, the nip roller 460. As the substrate-adhesive-foil structure continues to advance (in a direction indicated by the arrow 432) through the pressing section (via, for example, a conveyor belt 430 which may be similar to the conveyor belt 230), it is subjected to energy from one or more energy sources 470a and 470b (which may be similar to any of the energy sources 240, 270a, 270b and 440 described herein). The energy, which in some embodiments, permeates through the foil placed on the adhesive, causes the adhesive 422 to undergo the curing process during which the adhesive becomes tacky and adheres to the foil and/or the substrate. The curing performed during the pressing also causes the substantial solidification of the foil-adhesive-substrate structure prior to the completion of the pressing (i.e., before the foil-adhesive-substrate structure exits the pressing section at the nip roller 462 and/or before peeling of excess foil is performed using a peeler 480).

As further shown in FIG. 7, according to the invention, another energy source 490 is positioned proximate to the foil web 464, and may be configured to apply energy to the foil web 464 generally before the energized web comes in contact with the adhesive on top of the substrate entering the pressing section 450. The energy source 490 is configured to apply energy to the foil web 464 at a sufficient level to cause the foil to become more flexible. The higher achieved flexibility of the foil 464 enables better contact with the adhesive layer 422 when the heated foil is placed/pressed by, for example, the nip roller 460. The energy source 490 may be positioned between a spool 466 and the nip roller 460 at a distance sufficient to apply energy to the foil. The energy source 490 may be similar to any of the energy sources 440, 470a and 470, and may include, for example, a UV source, a lamp generating incoherent optical radiation, a laser source, an electron beam generator, a heating element. Other types of energy sources may be used.

While FIG. 7 depicts only one energy source, additional optional energy sources to apply energy to the foil to control the flexibility and/or other of the materials' properties (e.g., elasticity, malleability) may be used. The energy source 490 and/or other optional energy sources that control properties of the foil may be arranged using different configurations to achieve various desirable energy distributions on the foil to thus further control the properties of the foil, and by extension, control the placement of the foil on the adhesive, as well as the resultant structure that exits the pressing section of the system 400 (e.g., additional energy sources may be placed along the path followed by the foil to control the temperature, flexibility and other properties of the foil and/or other materials, in some pre-determined manner). Furthermore, the use of energy sources to control properties of the foil, e.g., the foil's flexibility, may also be implemented in other types of systems in which foil, such as the foil shown in FIGS. 2 and 4 is used, and not only with respect to the systems 200 and/or 400.

In some implementations, the foil web can be made more flexible by reducing the web's tension (i.e., causing it to become more slack) by applying different levels of torque at different locations along the advancing web. With reference to FIG. 8, a schematic diagram of a pressing system/machine 500 to place foil on a curable adhesive deposited on a substrate is shown. The machine 500 includes nip rollers 510 and 512 configured to apply force to a foil web 520 contacting the nip rollers to place the web onto an adhesive layer 532 deposited on a substrate 530 that is being advanced (e.g., using a conveyor belt 502) through the pressing system. Curing of the adhesive layer may be performed by one or more energy sources 540a and 540b, which may be similar to any of the energy sources depicted, for example, in FIGS. 2, 4 and 7.

One or more of the nip rollers 510 and/or 512 is actuated by a driving mechanism such as auxiliary rollers 514 and 516 that may each be actuated by associated respective motors (not shown) to transfer rotational motion to the auxiliary rollers. As the auxiliary rollers 514 and 516 rotate, they in turn transfer rotational motion (torque) to their respective nip rollers. By controlling the respective rotation speeds (angular speeds) of the auxiliary rollers, the tension of the foil web 520 may be controlled. Particularly, by controlling the rotational speeds of the auxiliary rollers, the nip rollers 510 and 512 may be actuated to rotate at different speeds. As a result of the different rotational speeds at which the nip rollers 510 and 512 are rotating (for example, the nip roller 510 can be actuated to rotate at a higher speed than the nip roller 512) the tension in the foil web is reduced, and the foil web 520 obtains more slack, thus reducing stretching/warping effect depicted, for example, in FIG. 3.

A feedback mechanism 550 may be used to determine the tension of the foil web placed between the two nip rollers 510 and 512, and control the motors actuating the auxiliary rotors 514 and 516 based on the measured tension so as to increase or decrease the rotational speeds of either of the nip rollers 510 and/or 512. The tension of the foil web can be determined based on the measured power consumed by the driving motor (i.e., the power consumed may be proportional to the tension of the foil in a manner that can determined through, for example, a calibration procedure). If it is determined that the tension in the web is too high, the feedback mechanism can control the auxiliary roller 514 control signal to cause the roller to increase its rotational speed, which in turn will cause the nip roller 510 to increase its rotational speed and thus cause the tension in the foil web to decrease.

It should be noted that the positioning of the auxiliary rollers depicted in FIG. 8 as being underneath the nip rollers 510 and 512 is by example only, and that the auxiliary rollers can be positioned in other locations in the arrangement that includes the nip rollers 510 and 512. The nip rollers may be directly coupled to motors that actuate the nip rollers to control their rotational speeds. Additionally, other types of driving mechanisms may be used to control the motion of the nip rollers and by extension the level of tension in the foil. Furthermore, the use of a driving mechanism to facilitate controlling foil tension may also be implemented in other types of systems in which foil, such as the foil shown in FIGS. 2, 4, 7 and 8 is used, and not only with respect to the systems 200, 400 and/or 500.

Turning back to FIG. 7, in some embodiments, the system 400 may also include a pressure device 492 configured to direct air, or some other gases or fluids, at the foil, to controllably press the foil onto the adhesive being cured. The air pressure device includes a conduit 493, such as a pipe or a hose, connected at one end to an air source 494 (e.g., a pump or a high pressure tank) that directs air through the conduit 493 to the conduit's distal outlet. The conduit's outlet is positioned, for example, over the foil, and thus the application of the pressurized gas or liquid over the foil during the curing of the adhesive 422 (as the adhesive is becoming tacky and subsequently is hardening) causes controllable level of force to be applied to the foil to thus improve the contact between the foil and the adhesive undergoing the curing process. In some embodiments, other types of devices to cause a controlled application of force on the foil to improve contact between the foil, adhesive and the substrate may be employed. Although one air pressure device is shown in FIG. 7, additional similar devices (and/or other types of force creating devices) may be used, and positioned along different points in the pressing section 450, or elsewhere. Furthermore, here too, the use of force application devices to improve contact between the foil and the underlying adhesive layer and the substrate on which it is deposited may also be implemented in other types of systems in which foil, such as the foil shown in FIGS. 2 and 4, is used, and not only with respect to the systems 200 and/or 400.

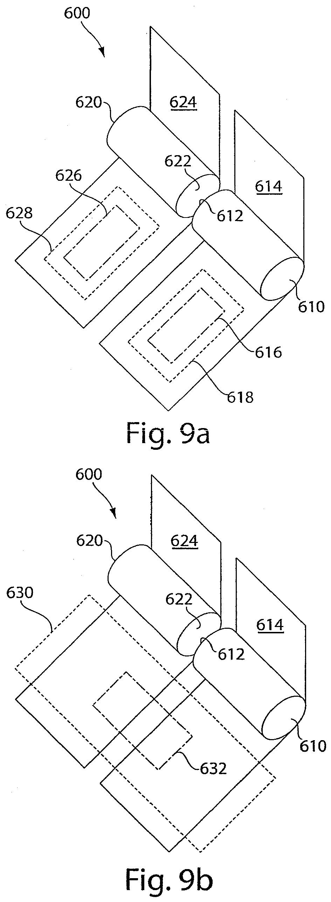

In some implementations, a pressing system may enable the simultaneous application of different foil materials. In such implementations, the pressing system may be configured to press one or more different foils to respective adhesive layers deposited on one or more substrates using multiple adjacent nipping rollers aligned, for example, along respective longitudinal axes of the multiple nipping rollers. Thus, with reference to FIG. 9a, a schematic view of a nip rolling assembly 600 is shown. The nip rolling assembly 600 could be used, for example, in place of the nipping roller 460 and/or the nipping roller 462 depicted in FIG. 7. The nipping roller assembly 600 includes two separate nipping roller 610 and 620 that are positioned adjacent to each other (e.g., placed in an a sequential arrangement along the respective longitudinal axes of the nip rollers) and may be abutting, or nearly abutting, at one of their ends 612 and 622 respectively. Each of the nip rollers 610 and 620 may be similar to any one of the nip rollers shown in FIGS. 2, 4 and 7. The nipping rollers 610 and 620 of the assembly 600 comes in contact with respective foil webs 614 and 624. The webs may be of the same or different materials. The webs 614 and 624 can be fed from separate spools (not shown in FIG. 9a).

As the foil webs advance underneath the adjacent nip rollers 610 and 620, the nip rollers cause the foils to contact respective adhesive layers 616 and 626 (depicted using dashed-dotted lines) deposited on respective substrates 618 and 628 (depicted using dashed lines). The various adhesives and/or substrates described in relation to FIG. 9a may be similar to the adhesives and/or substrates described in relation to FIGS. 2, 4 and 7. Thus, the adhesives 616 and 626 may be curable adhesives that become tacky upon application of energy from one or more energy sources (not shown in FIG. 8a) that are positioned past (downstream) the nipping rollers 610 and 620 to avoid, for example, the stretching/warping effects illustrated in FIG. 3. Upstream energy sources (i.e., energy sources located prior to the nip rollers 610 and 620) may be applied to the adhesives to initiate curing, but without causing the adhesives to become tacky. While FIG. 9a shows two adjacent nip rollers, additional nip rollers may be used. The use of multiple adjacent nip roller arrangements may also be implemented in other types of systems in which foil is used, and not only with respect to the systems 200 and/or 400 shown in FIGS. 2 and 7, respectively.

The assembly of adjacent nip rollers may be applied to a single structure of an adhesive layer deposited on top of a single substrate, as shown, for example, in FIG. 9b, in which the arrangement including the nip rollers 610 and 620 operates on a single substrate 630 (depicted using dashed lines) that is topped with curable adhesive layer 632 (depicted using dashed-dotted lines). The adhesive of the layer 632 may be similar to any of the adhesives described herein, for example, the adhesives 222 and/or 422 shown in FIGS. 2 and 7, respectively. The adhesive layer 632 may be a patterned layered deposited using, for example, a printing device, such as the printing device 210 of FIG. 2. Implementations such as the one shown in FIG. 9b may be used, for example, to place different types of foils on different areas of the adhesive-substrate structure (e.g., foils made of different materials, having different colors or other properties). Foil may be placed on only one part of a substrate-adhesive structure, while no foil is placed on another part of the substrate-adhesive structure. Such an arrangement of selective foil placement can be implemented, for example, by removing or not using a nip roller when a particular portion of the substrate-adhesive is not to be covered by foil, or alternatively, by not feeding foil to a nip roller contacting a part of the substrate-adhesive that is not to be covered.

A number of embodiments have been described. Nevertheless, it will be understood that various modifications may be made without departing from the scope of the invention. Accordingly, other embodiments are within the scope of the following claims.

## Claims

1. A method for producing foil relief, the method comprising:
applying energy to a foil (464) configured to be pressed to a curable adhesive (422) deposited on a substrate (420) to increase the flexibility of the foil (464);
subsequently placing said foil (464) on a curable adhesive (422) deposited on a substrate (420) when the curable adhesive (422) is substantially non-tacky; and
applying energy to the adhesive (422) deposited on the substrate (420) while pressing the foil (464) to the adhesive (422) to cause the adhesive (422) to become tacky and to adhere to the foil (464);
wherein the adhesive (422) becomes substantially fully cured prior to completion of the pressing of the foil (464) to the adhesive (422) deposited on the substrate (420).

2. The method of claim 1, further comprising:
pre-curing the curable adhesive (422) prior to placing the foil (464) on the adhesive (422) deposited on the substrate (420) to initiate the curing process of the adhesive (422) and increase a viscosity level of the curable adhesive (422), the pre-cured adhesive (422) remaining substantially non-tacky.

3. The method of claim 1, further comprising:
depositing a layer of the curable adhesive (422) on the substrate (420) in a pre-determined pattern prior to the placing of the foil (464) on the adhesive (422) deposited on the substrate (420).

4. The method of claim 1, wherein placing the foil (464) on the adhesive (422) deposited on the substrate (420) comprises:
pressing the foil (464) to the adhesive (422) deposited on the substrate (420) using one or more nipping rollers (460, 462).

5. The method of claim 4, wherein pressing the foil (464) to the adhesive (422) deposited on the substrate (420) using one or more nipping rollers (460, 462) comprises:
pressing the foil (464) to the adhesive (422) deposited on the substrate (420) using a first set of nipping rollers (460) when the adhesive (422) is substantially non-tacky; and
pressing the foil (464) to the cured adhesive (422) deposited on the substrate (420) using a second set of nipping rollers (462) after applying the energy.

6. The method of claim 1, further comprising:
increasing flexibility of the foil (464) being placed on the adhesive (422) deposited on the substrate (420) by performing one or more of:
actuating multiple nip rollers (460, 462) used to press the foil (464) to the adhesive (422) deposited on the substrate (420) to move at different rotational speeds; and
applying pressure to the foil (464).

7. The method of claim 1, wherein placing the foil (464) on the adhesive (422) deposited on the substrate (420) comprises:
pressing one or more different foils (464) to respective adhesive layers (422) deposited on one or more substrates (420) using multiple adjacent nipping rollers (460, 462) aligned along respective longitudinal axes of the multiple nipping rollers (460, 462).

8. The method of claim 1, wherein:
controllably pressing said foil (464) to said adhesive (422) is done by a force creating device (492), optionally said force creating device (492) comprises one of: an air source, a pump and a high pressure tank.

9. A pressing system (400) for foil relief production, comprising:
a pressing section (450) comprising;
foil dispensing means (466);
first nipping means (460);
a first energy source (490) mounted between said foil dispensing (466) means and said first nipping means (460);
second nipping means (462);
one or more second energy sources (470a,b) mounted between said first nipping means (460) and said second nipping means (462); and
substrate conveying means (430) configured to convey a substrate (420) deposited with curable adhesive (422);
said pressing section (450) configured to press a foil (464) to said substrate (420) received at said pressing section (450) when said curable adhesive (422) is substantially non-tacky;
said first energy source (490) configured to apply energy to said foil for increasing the flexibility of said foil (464);
said one or more second energy sources (470a,b) configured to apply energy to said foil (464) pressed to said curable adhesive (422) deposited on said substrate (420) to cause the adhesive (422) to become tacky and adhere to said foil (464);
wherein said adhesive (422) becomes substantially fully cured prior to completion of said foil (464) adhered to said substrate (420) .

10. The system (400) of claim 9, further comprising:
another energy source (440) configured to apply energy to pre-cure said curable adhesive (422) prior to delivering said curable adhesive (422) deposited on said substrate (420) to said pressing section (450), said other energy source (440) configured to initiate the curing process of said adhesive (422) and manipulate a viscosity level of said curable adhesive (422), said pre-cured adhesive (422) remaining substantially non-tacky.

11. The system (400) of claim 9, further comprising:
a printing device (410) configured to deposit a pre-determined pattern of said curable adhesive (422) on said substrate (420).

12. The system (400) of claim 9, wherein said first nipping means (460) comprises:
a first set of nipping rollers positioned upstream of said one or more second energy sources (470a,b), said first set of nipping rollers configured to press said foil (464) to said substantially non-tacky adhesive (422) deposited on said substrate (420); wherein said second nipping means (462) comprises:
a second set of nipping rollers positioned downstream of said one or more second energy sources (470a,b), said second set of nipping rollers configured to press said foil (464) to said cured adhesive (422) deposited on said substrate (420) after application of energy by said one or more second energy sources (470a,b).

13. The system (400) of claim 9, further comprising:
a force creating device (492) mounted between said first nipping means (460) and said second nipping means (462), said force creating device (492) configured to assist in pressing said foil (464) to said adhesive (422).

14. A system (400) for the production of foil relief, comprising:
an integrated nipping-curing system (450) for receiving a substrate (420) topped with a patterned layer of curable adhesive (422), the curable adhesive (422) being non-tacky, said system (400) comprising:
i. means for nipping and foil dispensing (466, 460, 462);
ii. means (490) for applying energy to a foil (464) for causing the foil (464) to become flexible before nipping and after foil dispensing;
iii. first radiation emitting means (440, 470a,b) adapted for causing the adhesive (422) to become tacky and for fully curing said foiled and nipped adhesive (422), located upstream of the end of said nipping means (462); and;
iv. means (480) for peeling excess foil (464) from adhesive-free surfaces of said
cured substrate (420);
wherein said peeling means (480) is downstream of said full-curing radiation emitting means (470a,b).

15. A method for applying foil (464) onto a substrate (420), said method comprising the steps of:
a. providing a system (400) for the production of foil relief, comprising:
I. an integrated nipping-curing system (450), receiving a substrate (420) topped with a patterned layer of curable adhesive (422), said adhesive (422) being substantially non-tacky when received by the integrated nipping-curing system (450); and,
II. means (480) for peeling excess foil (464) from adhesive-free surfaces of said cured substrate (420);
b. applying energy to said foil (464) for increasing the flexibility of said foil (464);
c. traversing said adhesive topped substrate (420) through said nipping system (450);
d. nipping said foil and said substrate (420) thereby bringing said foil (464) into contact with the top side of said adhesive topped substrate (420);
e. curing said adhesive (422) substantially fully;
f. solidifying the adhesion of said foil (464) to said patterned layer of curable adhesive (422);
g. peeling the excess of said foil (464), by peeling foil (464) away from surfaces upon said substrate (420) that have not been patterned with said layer of adhesive (422), and;
h. producing a relief of foil (464) upon said substrate (420);
wherein curing said adhesive (422) substantially fully is performed prior to said peeling.

## Patentansprüche

1. Verfahren zum Herstellen einer Folienaussparung, wobei das Verfahren Folgendes umfasst:
Anlegen von Energie an eine Folie (464), die konfiguriert ist, um an einen härtbaren Klebstoff (422) gedrückt zu werden, der auf einem Substrat (420) aufgebracht ist, um die Flexibilität der Folie (464) zu erhöhen;
anschließend Platzieren der Folie (464) auf einem härtbaren Klebstoff (422), der auf einem Substrat (420) aufgebracht ist, wenn der härtbare Klebstoff (422) im Wesentlichen nicht klebrig ist; und
Anlegen von Energie an den Klebstoff (422), der auf dem Substrat (420) aufgebracht ist, während die Folie (464) auf den Klebstoff (422) gedrückt wird, um zu verursachen, dass der Klebstoff (422) klebrig wird und an der Folie (464) festklebt;
wobei der Klebstoff (422) im Wesentlichen vor dem Abschluss des Drückens der Folie (464) an den Klebstoff (422), der auf dem Substrat (420) aufgebracht ist, vollständig gehärtet wird.

2. Verfahren nach Anspruch 1, ferner umfassend:
Vorhärten des härtbaren Klebstoffs (422) vor dem Platzieren der Folie (464) auf dem Klebstoff (422), der auf dem Substrat (420) aufgebracht ist, um den Härtungsprozess des Klebstoffs (422) zu initiieren und um einen Viskositätsgrad des härtbaren Klebstoffs (422) zu erhöhen, wobei der vorgehärtete Klebstoff (422) im Wesentlichen nicht klebrig bleibt.

3. Verfahren nach Anspruch 1, ferner umfassend:
Aufbringen einer Schicht des härtbaren Klebstoffs (422) auf das Substrat (420) in einem vorbestimmten Muster vor dem Platzieren der Folie (464) auf dem Klebstoff (422), der auf dem Substrat (420) aufgebracht ist.

4. Verfahren nach Anspruch 1, wobei das Platzieren der Folie (464) auf dem Klebstoff (422), der auf dem Substrat (420) aufgebracht ist, Folgendes umfasst:
Drücken der Folie (464) an den Klebstoff (422), der auf dem Substrat (420) aufgebracht ist, unter Verwendung von einer oder mehreren Andruckwalzen (460, 462).

5. Verfahren nach Anspruch 4, wobei das Drücken der Folie (464) auf den Klebstoff (422), der auf dem Substrat (420) aufgebracht ist, unter Verwendung von einer oder mehreren Andruckwalzen (460, 462) Folgendes umfasst:
Drücken der Folie (464) an den Klebstoff (422), der auf dem Substrat (420) aufgebracht ist, unter Verwendung eines ersten Satzes von Andruckwalzen (460), wenn der Klebstoff (422) im Wesentlichen nicht klebrig ist; und
Drücken der Folie (464) an den gehärteten Klebstoff (422), der auf dem Substrat (420) aufgebracht ist, unter Verwendung eines zweiten Satzes von Andruckwalzen (462) nach dem Anlegen der Energie.

6. Verfahren nach Anspruch 1, ferner umfassend:
Erhöhen der Flexibilität der Folie (464), die auf dem Klebstoff (422) platziert wird, der auf dem Substrat (420) aufgebracht ist, durch Durchführen von einem oder mehreren des Folgenden:
Betätigen von mehreren Andruckwalzen (460, 462), die verwendet werden, um die Folie (464) an den Klebstoff (422), der auf dem Substrat (420) aufgebracht ist, zu drücken, sodass sie sich mit unterschiedlichen Drehgeschwindigkeiten bewegen; und
Ausüben von Druck auf die Folie (464).

7. Verfahren nach Anspruch 1, wobei das Platzieren der Folie (464) auf dem Klebstoff (422), der auf dem Substrat (420) aufgebracht ist, Folgendes umfasst:
Drücken von einer oder mehreren unterschiedlichen Folien (464) an entsprechende Klebeschichten (422), die auf einem oder mehreren Substraten (420) aufgebracht sind, unter Verwendung von mehreren benachbarten Andruckwalzen (460, 462), die entlang entsprechenden Längsachsen der mehreren Andruckwalzen (460, 462) ausgerichtet sind.

8. Verfahren nach Anspruch 1, wobei:
das steuerbare Drücken der Folie (464) an den Klebstoff (422) durch eine Krafterzeugungsvorrichtung (492) erfolgt, wobei optional die Krafterzeugungsvorrichtung (492) eines aus Folgendem umfasst: eine Luftquelle, eine Pumpe und einen Hochdrucktank.

9. Presssystem (400) zur Folienaussparungsherstellung, umfassend:
einen Pressabschnitt (450), umfassend:
ein Folienausgabemittel (466);
ein erstes Andruckmittel (460);
eine erste Energiequelle (490), die zwischen dem Folienausgabe (466)-mittel und dem ersten Andruckmittel (460) montiert ist;
ein zweites Andruckmittel (462);
eine oder mehrere zweite Energiequellen (470a,b), die zwischen dem ersten Andruckmittel (460) und dem zweiten Andruckmittel (462) montiert sind; und
ein Substratfördermittel (430), das konfiguriert ist, um ein Substrat (420), das mit einem härtbaren Klebstoff (422) aufgebracht ist, zu befördern;
den Pressabschnitt (450), konfiguriert, um eine Folie (464) an das Substrat (420) zu drücken, das an dem Pressabschnitt (450) erhalten wird, wenn der härtbare Klebstoff (422) im Wesentlichen nicht klebrig ist;
die erste Energiequelle (490), konfiguriert, um Energie an die Folie zum Erhöhen der Flexibilität der Folie (464) anzulegen;
die eine oder die mehreren zweiten Energiequellen (470a,b), konfiguriert, um Energie an die Folie (464) anzulegen, die an den härtbaren Klebstoff (422) gedrückt wird, der auf dem Substrat (420) aufgebracht ist, um zu verursachen, dass der Klebstoff (422) klebrig wird und an der Folie (464) festklebt;
wobei der Klebstoff (422) vor dem Abschluss des Festklebens der Folie (464) an dem Substrat (420) im Wesentlichen vollständig gehärtet wird.

10. System (400) nach Anspruch 9, ferner umfassend:
eine weitere Energiequelle (440), die konfiguriert ist, um Energie anzulegen, um den härtbaren Klebstoff (422) vor dem Bereitstellen des härtbaren Klebstoffs (422), der auf dem Substrat (420) aufgebracht ist, für den Pressabschnitt (450) vorzuhärten, wobei die andere Energiequelle (440) konfiguriert ist, um den Härtungsprozess des Klebstoffs (422) zu initiieren und einen Viskositätsgrad des härtbaren Klebstoffs (422) zu beeinflussen, wobei der vorgehärtete Klebstoff (422) im Wesentlichen nicht klebrig bleibt.

11. System (400) nach Anspruch 9, ferner umfassend:
eine Druckvorrichtung (410), die konfiguriert ist, um ein vorbestimmtes Muster des härtbaren Klebstoffs (422) auf dem Substrat (420) aufzubringen.

12. System (400) nach Anspruch 9, wobei das erste Andruckmittel (460) Folgendes umfasst:
einen ersten Satz von Andruckwalzen, die stromaufwärts der einen oder mehreren zweiten Energiequellen (470a,b) positioniert sind, wobei der erste Satz von Andruckwalzen konfiguriert ist, um die Folie (464) an den im Wesentlichen nicht klebrigen Klebstoff (422) zu drücken, der auf dem Substrat (420) aufgebracht ist; wobei das zweite Andruckmittel (462) Folgendes umfasst:
einen zweiten Satz von Andruckwalzen, die stromabwärts der einen oder mehreren zweiten Energiequellen (470a,b) positioniert sind, wobei der zweite Satz von Andruckwalzen konfiguriert ist, um die Folie (464) nach dem Anlegen von Energie durch die eine oder mehreren zweiten Energiequellen (470a,b) an den gehärteten Klebstoff (422) zu drücken, der auf dem Substrat (420) aufgebracht ist.

13. System (400) nach Anspruch 9, ferner umfassend:
eine Krafterzeugungsvorrichtung (492), die zwischen dem ersten Andruckmittel (460) und dem zweiten Andruckmittel (462) montiert ist, wobei die Krafterzeugungsvorrichtung (492) konfiguriert ist, um beim Drücken der Folie (464) an den Klebstoff (422) zu helfen.

14. System (400) für die Herstellung von Folienaussparung, umfassend:
ein integriertes Andruck-Härtungs-System (450) zum Erhalten eines Substrats (420), das mit einer gemusterten Schicht aus härtbarem Klebstoff (422) bedeckt ist, wobei der härtbare Klebstoff (422) nicht klebrig ist, wobei das System (400) Folgendes umfasst:
i. ein Mittel zum Andrücken und Folienausgeben (466, 460, 462);
ii. ein Mittel (490) zum Anlegen von Energie an eine Folie (464), um zu verursachen, dass die Folie (464) vor dem Andrücken und nach dem Folienausgeben flexibel wird;
iii. ein erstes Strahlungsabgabemittel (440, 470a,b), das angepasst ist, um zu verursachen, dass der Klebstoff (422) klebrig wird und um den mit Folie versehenen und angedrückten Klebstoff (422) vollständig zu härten, das stromaufwärts des Endes des Andruckmittels (462) angeordnet ist; und
iv. ein Mittel (480) zum Abziehen von überschüssiger Folie (464) von klebstofffreien Oberflächen des gehärteten Substrats (420);
wobei das Abziehmittel (480) stromabwärts des vollständig härtenden Strahlungsabgabemittels (470a,b) ist.

15. Verfahren zum Anbringen von Folie (464) auf ein Substrat (420), wobei das Verfahren die folgenden Schritte umfasst:
a. Bereitstellen eines Systems (400) für die Herstellung von Folienaussparung, umfassend:
I. ein integriertes Andruck-Härtungs-System (450), das ein Substrat (420) erhält, das mit einer gemusterten Schicht aus härtbarem Klebstoff (422) bedeckt ist, wobei der härtbare Klebstoff (422) im Wesentlichen nicht klebrig ist, wenn er durch das integrierte Andruck-Härtungs-System (450) erhalten wird; und
II. ein Mittel (480) zum Abziehen von überschüssiger Folie (464) von klebstofffreien Oberflächen des gehärteten Substrats (420);
b. Anlegen von Energie an die Folie (464) zum Erhöhen der Flexibilität der Folie (464);
c. Durchlaufen des mit Klebstoff bedeckten Substrats (420) durch das Andrucksystem (450);
d. Andrücken der Folie und des Substrats (420), wodurch die Folie (464) in Kontakt mit der Oberseite des mit Klebstoff bedeckten Substrats (420) gebracht wird;
e. im Wesentlichen vollständiges Härten des Klebstoffs (422);
f. Verfestigen der Haftung der Folie (464) an der gemusterten Schicht aus härtbarem Klebstoff (422);
g. Abziehen des Überschusses der Folie (464) durch Abziehen von Folie (464) weg von Oberflächen auf dem Substrat (420), die nicht mit der Schicht aus Klebstoff (422) gemustert wurden, und
h. Herstellen einer Aussparung aus Folie (464) auf dem Substrat (420);
wobei das im Wesentlichen vollständige Härten des Klebstoffs (422) vor dem Abziehen durchgeführt wird.

## Revendications

1. Procédé de production d'un relief de feuille, le procédé comprenant :
l'application d'une énergie à une feuille (464) configurée pour être appuyée contre un adhésif durcissant (422) déposé sur un substrat (420) afin d'augmenter la flexibilité de la feuille (464) ;
le placement, ensuite, de ladite feuille (464) sur un adhésif durcissant (422) déposé sur un substrat (420) lorsque l'adhésif durcissant (422) est sensiblement non collant ; et
l'application d'une énergie à l'adhésif (422) déposé sur le substrat (420) tout en appuyant la feuille (464) contre l'adhésif (422) afin que l'adhésif (422) devienne collant et adhère à la feuille (464) ;
dans lequel l'adhésif (422) devient sensiblement durci en intégralité avant l'achèvement de l'appui de la feuille (464) contre l'adhésif (422) déposé sur le substrat (420).

2. Procédé selon la revendication 1, comprenant en outre :
le pré-durcissement de l'adhésif durcissant (422) avant de placer la feuille (464) sur l'adhésif (422) déposé sur le substrat (420) afin de déclencher le processus de durcissement de l'adhésif (422) et d'augmenter un niveau de viscosité de l'adhésif durcissant (422), l'adhésif pré-durci (422) restant sensiblement non-collant.

3. Procédé selon la revendication 1, comprenant en outre :
le dépôt d'une couche d'adhésif durcissant (422) sur le substrat (420) selon un motif prédéterminé avant le placement de la feuille (464) sur l'adhésif (422) déposé sur le substrat (420).

4. Procédé selon la revendication 1, dans lequel le placement de la feuille (464) sur l'adhésif (422) déposé sur le substrat (420) comprend :
le fait d'appuyer la feuille (464) contre l'adhésif (422) déposé sur le substrat (420) en utilisant un ou plusieurs rouleau(x) pinceur(s) (460, 462).

5. Procédé selon la revendication 4, dans lequel le fait d'appuyer la feuille (464) contre l'adhésif (422) déposé sur le substrat (420) à l'aide d'un ou plusieurs rouleaux(x) pinceur(s) (460, 462) comprend :
le fait d'appuyer la feuille (464) contre l'adhésif (422) déposé sur le substrat (420) en utilisant un premier groupe de rouleaux pinceurs (460) lorsque l'adhésif (422) est sensiblement non-collant ; et
le fait d'appuyer la feuille (464) contre l'adhésif durci (422) déposé sur le substrat (420) à l'aide d'un second groupe de rouleaux pinceurs (462) après l'application de l'énergie.

6. Procédé selon la revendication 1, comprenant en outre :
l'augmentation de la flexibilité de la feuille (464) placée sur l'adhésif (422) déposé sur le substrat (420) en effectuant un ou plusieurs de ce qui suit :
le déclenchement de plusieurs rouleaux pinceurs (460, 462) utilisés pour appuyer la feuille (464) contre l'adhésif (422) déposé sur le substrat (420) afin qu'ils se déplacent à différentes vitesses de rotation ; et
l'application d'une pression sur la feuille (464).

7. Procédé selon la revendication 1, dans lequel le placement de la feuille (464) sur l'adhésif (422) déposé sur le substrat (420) comprend :
le fait d'appuyer une ou plusieurs feuilles différente(s) (464) sur des couches d'adhésif respectives (422) déposées sur un ou plusieurs substrat(s) (420) à l'aide de plusieurs rouleaux pinceurs adjacents (460, 462) alignés le long des axes longitudinaux respectifs des rouleaux pinceurs (460, 462).

8. Procédé selon la revendication 1, dans lequel :
le fait d'appuyer de façon contrôlable ladite feuille (464) contre ledit adhésif (422) est réalisé par un dispositif de création de force (492), ledit dispositif de création de force (492) comprenant optionnellement l'un parmi : une source d'air, une pompe et un réservoir à haute pression.

9. Système de pression (400) destiné à la production d'un relief de feuille, comprenant :
une section de pression (450) comprenant :
un moyen de distribution de feuille (466) ;
un premier moyen pinceur (460) ;
une première source d'énergie (490) montée entre ledit moyen de distribution de feuille (466) et ledit premier moyen pinceur (460) ;
un second moyen pinceur (462) ;
une ou plusieurs source(s) d'énergie (470a, b) montée(s) entre ledit premier moyen pinceur (460) et ledit second moyen pinceur (462) ; et
un moyen de transport de substrat (430) configuré pour transporter un substrat (420) déposé avec de l'adhésif durcissant (422) ;
ladite section de pression (450) configurée pour appuyer une feuille (464) contre ledit substrat (420) reçu au niveau de ladite section de pression (450) lorsque ledit adhésif durcissant (422) est sensiblement non-collant ;
ladite première source d'énergie (490) configurée pour appliquer une énergie à ladite feuille afin d'augmenter la flexibilité de ladite feuille (464) ;
ladite ou lesdites source(s) d'énergie (470a, b) configurée(s) pour appliquer une énergie à ladite feuille (464) appuyée contre ledit adhésif durcissant (422) déposé sur ledit substrat (420) afin que l'adhésif (422) devienne collant et adhère à ladite feuille (464) ;
dans lequel ledit adhésif (422) devient sensiblement durci en intégralité avant l'achèvement du collage de ladite feuille (464) sur ledit substrat (420).

10. Système (400) selon la revendication 9, comprenant en outre :
une autre source d'énergie (440) configurée pour appliquer une énergie destinée à pré-durcir ledit adhésif durcissant (422) avant de fournir ledit adhésif durcissant (422) déposé sur ledit substrat (420) à ladite section de pression (450), ladite autre source d'énergie (440) étant configurée pour déclencher le processus de durcissement dudit adhésif (422) et pour manipuler un niveau de viscosité dudit adhésif durcissant (422), ledit adhésif pré-durci (422) restant sensiblement non-collant.

11. Système (400) selon la revendication 9, comprenant en outre :
un dispositif d'impression (410) configuré pour déposer un motif prédéterminé dudit adhésif durcissant (422) sur ledit substrat (420).

12. Système (400) selon la revendication 9, dans lequel ledit premier moyen pinceur (460) comprend :
un premier groupe de rouleaux pinceurs positionnés en amont de ladite ou desdites seconde(s) source(s) d'énergie (470a, b), ledit premier groupe de rouleaux pinceurs étant configuré pour appuyer ladite feuille (464) contre ledit adhésif sensiblement non-collant (422) déposé sur ledit substrat (420) ;
dans lequel ledit second moyen pinceur (462) comprend :
un second groupe de rouleaux pinceurs positionnés en aval de ladite ou desdites seconde(s) source(s) d'énergie (470a, b), ledit second groupe de rouleaux pinceurs étant configuré pour appuyer ladite feuille (464) contre ledit adhésif durci (422) déposé sur ledit substrat (420) après l'application d'énergie par ladite ou lesdites seconde(s) source(s) d'énergie (470a, b).

13. Système (400) selon la revendication 9, comprenant en outre :
un dispositif de création de force (492) monté entre ledit premier moyen pinceur (460) et ledit second moyen pinceur (462), ledit dispositif de création de force (492) étant configuré pour faciliter la pression de ladite feuille (464) contre ledit adhésif (422).

14. Système (400) de production d'un relief de feuille, comprenant :
un système de durcissement par pincement intégré (450) destiné à recevoir un substrat (420) qui a reçu une couche d'adhésif durcissant à motif (422), l'adhésif durcissant (422) étant non-collant, ledit système (400) comprenant :
i. un moyen de pincement et de distribution de feuille (466, 460, 462) ;
ii. un moyen (490) d'application d'une énergie sur une feuille (464) afin que la feuille (464) devienne flexible avant de le pincement et après la distribution de la feuille ;
iii. un premier moyen d'émission de rayonnement (440, 470a, b) adapté pour permettre à l'adhésif (422) de devenir collant et pour durcir entièrement ledit adhésif (422) appliqué sur la feuille et pincé, situé en amont de l'extrémité dudit moyen pinceur (462) ; et
iv. un moyen (480) destiné à décoller l'excédent de feuille (464) des surfaces sans adhésif dudit substrat durci (420) ;
dans lequel ledit moyen de décollement (480) est en aval dudit moyen d'émission de rayonnement de durcissement complet (470a, b).

15. Procédé d'application d'une feuille (464) sur un substrat (420), ledit procédé comprenant les étapes consistant à :
a. fournir un système (400) de production d'un relief de feuille, comprenant :
I. un système de durcissement par pincement intégré (450), qui reçoit un substrat (420) recouvert avec une couche à motif d'adhésif durcissant (422), ledit adhésif (422) étant sensiblement non-collant lorsqu'il est reçu par le système de durcissement par pincement intégré (450) ; et
II. un moyen (480) destiné à décoller l'excédent de feuille (464) des surfaces sans adhésif dudit substrat durci (420) ;
b. appliquer une énergie sur ladite feuille (464) afin d'augmenter la flexibilité de ladite feuille (464) ;
c. faire traverser ledit substrat recouvert d'adhésif (420) par ledit système de pincement (450) ;
d. pincer ladite feuille et ledit substrat (420) afin d'amener ladite feuille (464) en contact avec la partie supérieure dudit substrat recouvert d'adhésif (420) ;
e. durcir ledit adhésif (422) sensiblement en entier ;
f. solidifier l'adhérence de ladite feuille (464) sur ladite couche à motif d'adhésif durcissant (422) ;
g. décoller l'excédent de ladite feuille (464), en décollant la feuille (464) des surfaces dudit substrat (420) qui n'ont pas été gravées avec ladite couche d'adhésif (422), et ;
h. produire un relief de feuille (464) sur ledit substrat (420) ;
dans lequel le durcissement dudit adhésif (422) sensiblement en entier est effectué avant ledit décollement.
